(19) **Europäisches Patentamt**
**European Patent Office**
**Office européen des brevets**

(11) Numéro de publication : **0 177 419 B1**

(12) **FASCICULE DE BREVET EUROPÉEN**

(45) Date de publication du fascicule du brevet :
27.07.88

(51) Int. Cl.⁴ : **B 60 S 1/08, B 60 S 1/02**

(21) Numéro de dépôt : **85401907.2**

(22) Date de dépôt : **01.10.85**

(54) **Dispositif automatique d'actionnement des organes de nettoyage d'un vitrage de véhicule automobile.**

(30) Priorité : **04.10.84 FR 8415249**

(43) Date de publication de la demande :
**09.04.86 Bulletin 86/15**

(45) Mention de la délivrance du brevet :
**27.07.88 Bulletin 88/30**

(84) Etats contractants désignés :
**BE DE FR GB IT SE**

(56) Documents cités :
**EP-A- 0 009 414**
**WO-A-83 /020 93**
**DE-A- 2 101 319**
**DE-A- 3 203 091**
**JP-A-58 209 639**
**US-A- 4 476 419**

(73) Titulaire : **SAINT-GOBAIN VITRAGE**
**Les Miroirs 18, avenue d'Alsace**
**F-92400 Courbevoie (FR)**

(72) Inventeur : **Lecrecq, Jacques**
**34, rue de Cambrai**
**F-80240 Roisel (FR)**

(74) Mandataire : **Breton, Jean-Claude et al**
**SAINT-GOBAIN RECHERCHE 39, quai Lucien Lefranc**
**F-93300 Aubervilliers Cedex (FR)**

Jouve, 18, rue St-Denis, 75001 Paris, France

EP 0 177 419 B1

## Description

La présente invention est relative aux véhicules automobiles dont elle se propose d'accroître la sécurité en les équipant d'un dispositif automatique de nettoyage de leur vitrage et spécialement de leur lunette arrière.

Encore que le dispositif suivant l'invention puisse également être adapté au pare-brise, c'est dans sa combinaison avec la lunette arrière qu'il présente le maximum d'intérêt.

En. effet, le conducteur dès qu'il s'aperçoit d'une diminution de la visibilité au travers du pare-brise déclenche instinctivement les organes de nettoyage de celui-ci, tels que lave-glace et essuie-glace.

En revanche, il est moins sensible à une diminution de visibilité au travers de la lunette arrière car son attention et son regard sont essentiellement dirigés vers l'avant afin de détecter les pièges de la circulation.

Il serait donc intéressant de pouvoir se reposer sur un dispositif qui nettoierait automatiquement la lunette arrière des véhicules lorsque celle-ci a atteint un degré de salissure susceptible de gêner la visibilité.

Un dispositif de ce genre est décrit dans le document JP-A-58 209 639 publié le 6 décembre 1983 et auquel correspond le brevet US-A-4 476 419. D'après ce document, un émetteur placé à l'extérieur du compartiment passagers envoie un faisceau lumineux qui traverse le pare-brise et tombe sur un récepteur placé à l'intérieur dudit compartiment. Ce récepteur comprend une plaque munie de zones claires et sombres disposées en alternance, derrière lesquelles sont alignés des détecteurs reliés à un circuit permettant d'analyser les différences d'intensité lumineuse perçues par les détecteurs ; ce circuit autorise la commande des essuie-glace. En l'absence de pluie la différence d'intensité perçue par deux détecteurs adjacents, l'un derrière une zone claire, l'autre derrière une zone sombre, est maximale. Lorsqu'il pleut, cette différence s'atténue ce qui provoque la mise en action des essuie-glaces.

L'invention se propose de réaliser un dispositif fondé sur l'observation suivante :

Si l'on dispose sur un vitrage tel qu'une lunette arrière, des éléments photo-sensibles comparables disposés de manière à recevoir la lumière ayant traversé le vitrage, celui de ces éléments photo-sensibles qui reçoit directement cette lumière sera beaucoup plus sensible au degré de salissure du vitrage que l'autre élément photo-sensible protégé d'une arrivée directe de lumière et ne recevant de celle-ci que la fraction transmise par l'intérieur du vitrage.

Le second élément photo-sensible peut ainsi servir de référence pour mesurer l'écart de réponse de deux éléments photo-sensibles. Il en résulte que lorsque cet écart dépasse un seuil donné caractérisant un degré de salissure difficilement compatible avec une bonne visibilité, on peut mettre à profit cet écart grâce à un circuit électronique pour actionner les organes de nettoyage du vitrage.

Ceci suppose que lorsque le nettoyage a été effectué, le premier élément photo-sensible ou élément de mesure donne une réponse ou indication telle que l'écart de déclenchement ne soit plus atteint et qu'en conséquence, les organes de nettoyage cessent de fonctionner.

Ceci signifie que le premier élément photo-sensible est disposé dans le champ de balayage de l'essuie-glace.

L'invention a ainsi pour objet un dispositif automatique d'actionnement des organes de nettoyage d'un vitrage de véhicule automobile, comprenant deux éléments photo-sensibles, ce dispositif comprenant par ailleurs un circuit électronique pour recevoir et comparer les réponses de ces deux éléments photo-sensibles et des moyens pour commander automatiquement les organes de nettoyage lorsque la différence de réponse de ces éléments dépasse un certain seuil (Dispositif du type divulgué par JP-A-58 209 639), ce dispositif étant caractérisé en ce que, lesdits éléments sont disposés de manière à être influencés par la lumière traversant ce vitrage, le premier étant adapté à recevoir directement cette lumière et le second étant protégé de toute action directe de cette lumière de manière à n'être influencé que par celle transmise par l'intérieur du vitrage.

Il est par ailleurs possible de graduer l'automatisme. C'est ainsi que le seuil peut être fixé de manière à correspondre à une lunette arrière entièrement sale provoquant l'actionnement automatique de l'essuie-glace.

Lorsqu'après un certain temps de fonctionnement de celui-ci, la partie du vitrage balayée est devenue propre, cependant que la partie non balayée est restée opaque, l'essuie-glace cesse de fonctionner mais un signal est affiché au tableau de bord rappelant à l'automobiliste de finir le nettoyage de la lunette arrière à la première occasion.

Les éléments photo-sensibles susceptibles d'être utilisés selon l'invention, sont de divers types : photo-résistances ou photo-diodes. Lorsqu'il s'agit de photo-diodes dont l'épaisseur peut être extrêmement mince et lorsqu'on dispose d'un vitrage feuilleté, ces photo-diodes peuvent être incorporées et noyées dans la couche de matière plastique intercalaire entre les deux feuilles de verre constituant avec cette couche intercalaire le vitrage feuilleté, ainsi que cela est décrit dans la demande de brevet déposée en France sous le numéro 84 15 248 (demande de priorité ayant servi de base au dépôt de la demande européenne EP-A-0 177 420 et publiée sous le numéro FR-A-2 571 320)

L'invention a également pour objet un vitrage perfectionné équipé de ces deux éléments photo-sensibles et qu'il suffit ensuite de monter sur un véhicule en raccordant les bornes de sortie des éléments photo-sensibles à un circuit électronique assurant l'automatisme désiré.

Lorsque le véhicule comprend comme c'est parfois le cas un ordinateur de bord, cet ordinateur peut être mis à profit pour assurer cet automatisme.

L'invention sera mieux comprise à l'aide de la description qui va suivre, donnée uniquement à titre d'exemple et faite en se référant aux dessins annexés, sur lesquels :

la figure 1 est une coupe transversale d'un système de détection pour un dispositif automatique de nettoyage d'un vitrage de véhicule suivant l'invention,

la figure 2 est une vue schématique de face d'un vitrage muni du système de détection de la figure 1,

la figure 3 est une vue en perspective du support du système de détection de la figure 1,

la figure 4 est une coupe transversale d'un vitrage feuilleté muni d'un autre mode de réalisation d'un système de détection pour un dispositif automatique de nettoyage d'un vitrage de véhicule automobile,

la figure 5 est un synoptique d'un dispositif automatique de nettoyage d'un vitrage de véhicule automobile combiné avec un dispositif automatique d'allumage et d'extinction des feux du véhicule,

la figure 6 est un schéma électrique d'un dispositif automatique de nettoyage d'un vitrage de véhicule automobile combiné avec un dispositif automatique de dégivrage.

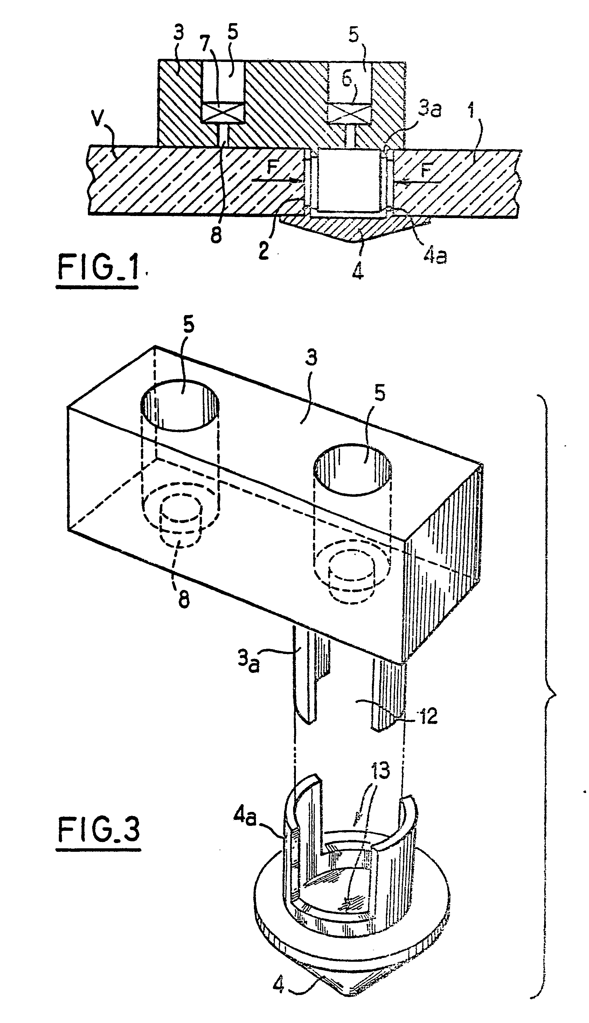

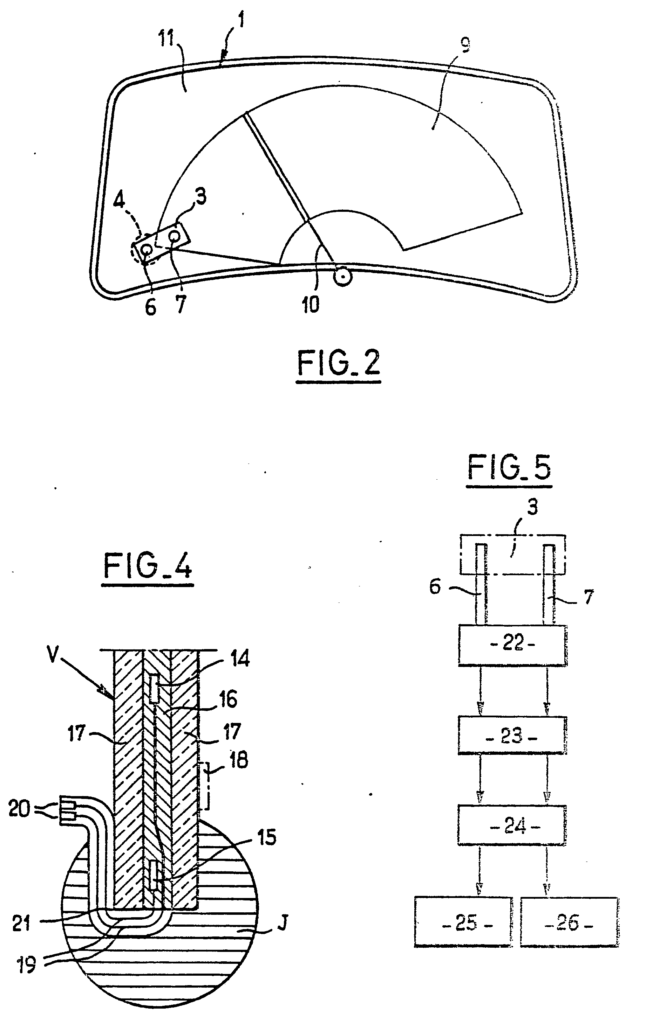

La figure 2 représente un vitrage 1 muni d'un premier mode de réalisation d'un système de détection pour dispositif d'actionnement des organes de nettoyage dudit vitrage, tel qu'illustré par la figure 1.

D'après cette dernière figure, une perforation 2, pratiquée dans le vitrage, reçoit une saillie tubulaire 3a d'un support 3 disposé contre la surface du vitrage intérieure au véhicule. La saillie tubulaire 3a est coiffée par une jupe 4a d'un bouton 4 plaqué contre la surface extérieure dudit vitrage.

Le support 3 comporte deux cavités 5 au fond desquelles sont fixés deux éléments photo-sensibles 6 et 7, leurs faces sensibles étant dirigées vers le fond. L'élément photo-sensible 6 est disposé pour être protégé de toute action directe de la lumière et ne recevoir que la lumière ambiante transmise par l'intérieur du vitrage suivant les directions indiquées par les flèches F ; il est placé, à cet effet, dans la cavité 5 coaxiale au bouton 4 qui assure la fonction d'écran pour la lumière directe. L'élément photo-sensible 6 constitue donc l'élément de référence.

En revanche, l'élément photo-sensible 7 qui se trouve dans l'autre cavité 5 dont l'axe est décalé par rapport à l'axe du bouton 4, reçoit directement la lumière traversant le vitrage. Il constitue ainsi l'élément de mesure. Ces éléments photo-sensibles 6 et 7 reçoivent la lumière à travers le support 3 par des fenêtres 8 percées dans le fond des cavités 5 et dont la section assure le calibrage et l'amplitude de la réponse de chaque élément photo-sensible.

Ainsi que le montre la figure 2, l'élément photo-sensible de mesure 7 est placé dans la zone 9 située dans le champ d'action des organes de nettoyage constitués, dans le présent exemple, par un essuie-glace 10. Du fait de ce positionnement, l'élément photo-sensible de mesure 7 fournit une réponse fonction du degré de propreté du vitrage 1, avant et après nettoyage de celui-ci.

Le positionnement de l'élément photo-sensible de référence 6 n'agit pas sur le résultat désiré et explicité précédemment, mais il sera montré ultérieurement que le choix de ce positionnement peut apporter certains avantages.

On va maintenant décrire plus en détail, en référence à la figure 3, les moyens de fixation du support du système de détection.

La saillie tubulaire 3a, dépassant de la surface du support 3 destinée à être appliquée contre le vitrage 1, a un diamètre tel qu'elle s'emboîte dans la jupe 4a du bouton 4, le diamètre extérieur de cette dernière étant à peu près égal au diamètre du trou 2 destiné à la loger.

Afin de permettre à la lumière transmise par l'intérieur du vitrage d'influencer l'élément photo-sensible de référence 6, deux encoches 12 diamétralement opposées sont réalisées axialement dans la saillie tubulaire 3a du support 3. Lors du montage, ces encoches seront vis-à-vis de deux encoches 13 diamétralement opposées réalisées axialement dans la jupe 4a du bouton 4.

Les éléments photo-sensibles ne devant être influencés que par la lumière traversant le vitrage, le support doit être parfaitement étanche à la lumière à sa périphérie et épouser parfaitement le profil du vitrage. A cet effet, on peut interposer entre la face du support à appliquer contre le vitrage et ce dernier, un joint en élastomère souple (non représenté) dont l'écrasement absorbera les effets du galbe du vitrage. Pour obtenir une mesure plus précise, il est avantageux de placer l'élément photo-sensible de mesure le plus près possible du verre.

Un deuxième mode de réalisation du système de détection du dispositif automatique d'actionnement des organes de nettoyage d'un vitrage de véhicule automobile est montré à la figure 4. Les éléments photo-sensibles 14 et 15 de ce second système sont, ici, des photo-diodes incorporées et noyées dans une couche de matière plastique intercalaire 16 disposée entre deux feuilles de verre 17 constituant avec cette couche intercalaire un vitrage feuilleté V. Un tel vitrage est décrit dans la demande de brevet 84 15 248 (FR-A-2 571 320).

Afin d'occulter la lumière directe traversant le vitrage feuilleté pour la photo-diode de référence 15, celle-ci est disposée dans la partie du vitrage V encastrée dans le joint J de ce dernier, de préférence dans la partie de ce joint J située dans la moitié supérieure du montant latéral du support dudit vitrage, la photo-diode de mesure 14 recevant directement la lumière à travers le vitrage. Les éléments photo-sensibles 14 et 15 sont reliés avec l'extérieur par des conducteurs 19 munis de bornes 20. Les conducteurs 19 et leurs bornes 20 sont repliés le long d'une arête 21 du vitrage feuilleté, puis d'une des feuilles de verre 17, de manière que les bornes 20 soient accessibles pour une connexion à tout dispositif électronique approprié.

Le système sera placé de manière identique à celle de l'exemple précédent en ce qui concerne la position des photo-diodes par rapport au champ d'action des organes de nettoyage et permettra, évidemment, d'obtenir les mêmes résultats.

En variante, la photo-diode 15 peut être montée en dehors de la partie du vitrage V encastrée dans le joint J, à condition de la protéger de la lumière directe par une pastille opaque 18 (en traits mixtes sur la figure 4) placée sur la surface extérieure du vitrage en regard de la face sensible de la photo-diode.

En se référant à nouveau à la figure 2, on voit que l'élément photo-sensible de référence est placé dans la zone 11 en dehors du champ d'action de l'essuie-glace, ce qui permet, par une inversion de l'écart des réponses des deux éléments, d'indiquer à l'automobiliste que la zone 11 du vitrage située en dehors du champ d'action de l'essuie-glace doit être nettoyée manuellement au plus vite. Cette indication est donnée au moyen d'un voyant situé sur le tableau de bord, par exemple, dont la commande sera décrite ultérieurement.

Comme indiqué précédemment, le dispositif automatique destiné à actionner les organes de nettoyage du vitrage comporte un circuit électronique pour recevoir et comparer les signaux de sortie des deux éléments photo-sensibles et des moyens de commande automatique disposés en parallèle dans le circuit de commande manuelle des organes de nettoyage.

Comme représenté à la figure 5, ce circuit électronique comprend un convertisseur courant-tension 22 aux entrées duquel sont connectés les capteurs 6 et 7 et dont les sorties sont reliées à un convertisseur analogique-numérique 23. Ce dernier a ses sorties connectées avec les entrées d'un micro-processeur 24 dont les sorties sont connectées, dans le présent exemple, à un circuit 25 de commande de l'éclairage du véhicule et un circuit 26 de commande de marche des organes de nettoyage 10. En effet, dans l'exemple proposé, le circuit électronique permet, par l'intermédiaire du circuit 25, d'actionner les organes d'éclairage du véhicule en fonction du signal de sortie de l'élément photo-sensible de mesure 7 de la manière décrite dans la demande de brevet 84 15 248 (FR-A- 2 571 320 ou EP-A- 0 177 420)

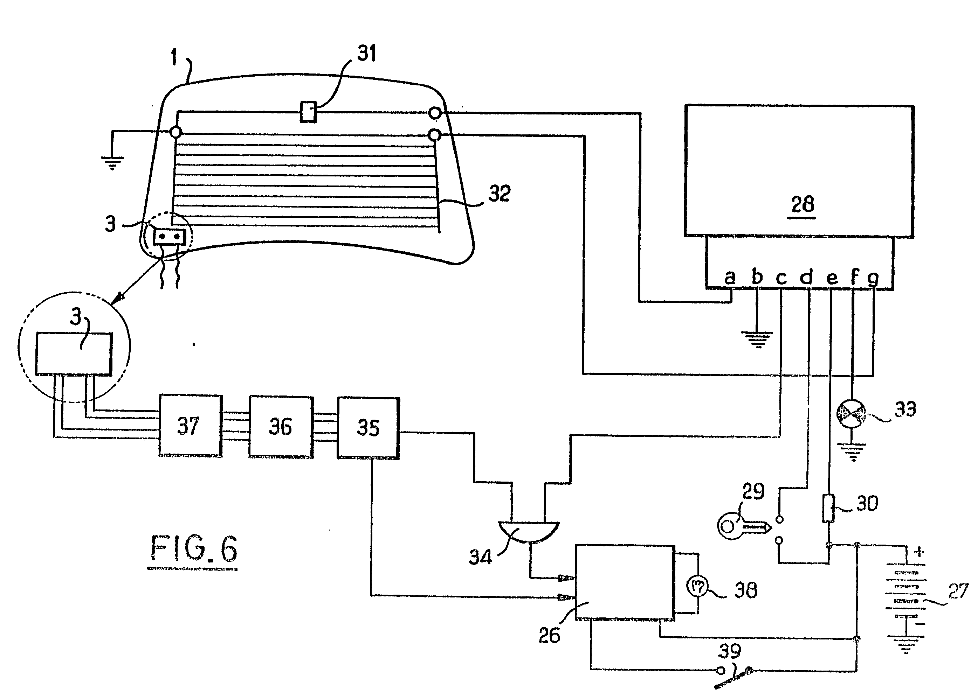

La figure 6 représente un schéma électrique dans lequel le dispositif automatique destiné à actionner les organes de nettoyage est combiné avec un dispositif pour la commande automatique des vitrages chauffants tel que décrit dans le brevet FR-A- 2 218 710. L'ensemble représenté sur cette figure est alimenté par une batterie 27 et comprend un module électronique 28 connecté à la batterie par ses bornes b, d et e. La connexion à la borne d est assurée par l'intermédiaire du contacteur général 29 du véhicule, la connexion à la borne e est assurée à travers un fusible 30. L'entrée a du module électronique 28 est connectée à une des bornes d'un détecteur de buée 31, placé sur le vitrage 1, l'autre borne du détecteur étant connectée à un réseau chauffant 32 du vitrage 1 et au pôle négatif de la batterie 27. En variante, on pourrait utiliser une sonde de température classique en place du détecteur 31. Cette sonde peut être constituée par un simple contact thermostatique commandé, par exemple, par un bilame se fermant lorsque la température est inférieure à 0°C et montée en parallèle avec le dispositif de commande principal. Le réseau chauffant est connecté à la borne g du module électronique. La borne f de ce module est connectée à un voyant d'indication de chauffage 33. La borne c de ce module est reliée à une entrée d'une porte « ET » 34 dont l'autre entrée est reliée à la sortie d'un comparateur 35 et dont la sortie est reliée à une entrée du circuit de commande 26. Le comparateur a ses entrées connectées aux sorties d'un convertisseur analogique-numérique 36. Les entrées de celui-ci sont reliées aux sorties d'un convertisseur courant-tension 37 dont les entrées sont reliées aux éléments photo-sensibles 6 et 7 placées sur le vitrage 1.

Une autre sortie du comparateur 35 et la sortie de la porte « ET » 34 sont reliées à des entrées correspondantes du circuit de commande 26 sur lequel est connecté un voyant d'indicateur 38 placé, par exemple, sur le tableau de bord du véhicule.

Le circuit de commande 26 est disposé en parallèle sur un interrupteur de commande manuelle 39 des organes de nettoyage et il est alimenté par la batterie 27.

Le fonctionnement du dispositif qui vient d'être décrit est le suivant :

Lorsque le vitrage 1 est propre sur toute sa surface, les organes de nettoyage 10 ne sont pas actionnés ; la différence d'amplitude, correspondant à cet état, entre le signal de sortie de la cellule de référence 6 et celui de la cellule de mesure 7 est, par exemple, de 3 mV maximum.

Dans le cas d'un vitrage sale sur toute sa surface, la différence d'amplitude dépasse un certain seuil et est, par exemple, de 13 mV. Alors le comparateur, par l'intermédiaire de la porte « ET » 34 et du circuit de commande 26, permet l'actionnement des organes de nettoyage 10 sous la condition suivante : Afin d'éviter le fonctionnement des organes de nettoyage qui, lorsqu'une couche de givre ou de neige recouvre le vitrage 1, entraînerait une détérioration de l'essuie-glace, les organes de nettoyage ne seront actionnés que lorsque la sortie c du module électronique 28 appliquée à l'autre entrée de la porte « ET » 34 indique que l'état de surface du vitrage autorise le nettoyage. Si du givre recouvre le vitrage, les organes de nettoyage ne pourront être actionnés qu'à la fin du dégivrage par le réseau chauffant 32 commandé automatiquement. Lorsque le nettoyage est effectué, l'écart entre les signaux de sortie des capteurs 6 et 7 diminue au-dessous du seuil précité et les organes de nettoyage s'arrêtent, mais la zone 11 du vitrage située en dehors du champ d'action de l'essuie-glace 10 reste sale.

Comme indiqué précédemment et représenté à la figure 2, la cellule de référence est disposée dans la zone 11 du vitrage et on obtient après nettoyage de la zone 9 par l'essuie-glace, une différence d'amplitude des signaux de sortie de la cellule de référence 6 et de la cellule 7 inversée, par exemple, de −10 mV. Cette différence de signe contraire à ceux des différences de réponses précédentes, apparaît à l'autre sortie du comparateur 35 qui commande l'allumage du voyant 38 indiquant à l'automobiliste qu'il doit finir de nettoyer la lunette arrière manuellement.

Il est possible de combiner les trois dispositifs automatiques d'éclairage, de chauffage et de nettoyage par l'intermédiaire d'un ordinateur de bord, par exemple.

## Revendications

1. Dispositif automatique d'actionnement des organes de nettoyage (10) d'un vitrage (1) de véhicule automobile, comprenant deux éléments photo-sensibles (6, 7 ; 14, 15), ce dispositif comprenant par ailleurs un circuit électronique pour recevoir et comparer les réponses de ces deux éléments photo-sensibles et des moyens pour commander automatiquement les organes, de nettoyage lorsque la différence de réponse de ces éléments dépasse un certain seuil, caractérisé en ce que lesdits éléments sont disposés de manière à être influencés par la lumière traversant ce vitrage, le premier (7, 14) étant adapté à recevoir directement cette lumière et le second (6, 15) étant protégé de toute action directe de cette lumière de manière à n'être influencé que par celle transmise par l'intérieur du vitrage.

2. Dispositif automatique selon la revendication 1, caractérisé en ce que l'élément photo-sensible (7, 14) recevant la lumière directe est situé dans le champ d'action de l'organe de nettoyage (10) et constitue l'élément de mesure, et que l'élément photo-sensible (6, 15) ne recevant que la lumière transmise par l'intérieur du vitrage constitue l'élément de référence et est situé en dehors dudit champ.

3. Dispositif automatique selon la revendication 1 ou la revendication 2, caractérisé en ce que les éléments photo-sensibles sont des photo-diodes (14, 15) dont l'épaisseur est telle qu'elles sont noyées dans la couche de matière plastique intercalaire (16) d'un vitrage feuilleté (V) et que la photo-diode de référence (15) est protégée de la lumière directe soit par son montage dans la partie encastrée dans le joint (J) de cette dernière, soit par une pastille opaque (18) située à l'extérieur du véhicule contre le vitrage en regard de la photo-diode de référence (15) et formant écran pour la lumière directe.

4. Dispositif automatique selon la revendication 1 ou la revendication 2, caractérisé en ce qu'il comprend un support (3), situé à l'intérieur du véhicule, maintenant les deux éléments photo-sensibles (6, 7), leur face sensible tournée vers le vitrage, et un bouton (4), situé à l'extérieur du véhicule contre le vitrage en regard de l'élément photo-sensible de référence (6) et formant écran pour la lumière directe.

5. Dispositif automatique selon la revendication 4, caractérisé en ce qu'une perforation (2) est pratiquée dans le vitrage (1) afin de permettre le passage des organes de maintien (3a et 4a) du support (3) et du bouton (4), lesdits organes comportant des ouvertures (12) permettant le passage de la lumière transmise par l'intérieur du vitrage vers l'élément photo-sensible de référence (6).

6. Dispositif automatique selon la revendication 5, caractérisé en ce que les organes de maintien du support et du bouton sont constitués par une saillie tubulaire (3a) et une jupe (4a) coopérant par emboîtement, et que des passages (12, 13) diamètralement opposés et correspondants sont pratiqués sur la saillie tubulaire (3a) et la jupe (4a).

7. Dispositif automatique selon l'une quelconque des revendications 4 à 6, caractérisé en ce que le support (3) comporte des cavités (5) où sont introduits les éléments photo-sensibles (6, 7) et au fond desquelles est percée une fenêtre (8) dont la section correspond à la quantité de lumière par laquelle on veut que les éléments soient influencés.

8. Dispositif automatique selon l'une quelconque des revendications précédentes, caractérisé en ce que le circuit électronique comprend un convertisseur courant-tension (22, 37), un convertisseur analogique-numérique (23, 36) et des moyens de comparaison (24, 35) reliés au circuit (26) de commande de marche de l'essuie-glace (10).

9. Dispositif automatique selon la revendication 8, caractérisé en ce que les moyens de comparaison sont constitués soit par un comparateur séparé (35), soit par un comparateur incorporé dans un micro-processeur (24).

10. Dispositif automatique selon l'une des revendications 8 ou 9, caractérisé en ce qu'il est associé à un circuit (25) de commande de l'éclairage du véhicule, l'élément photo-sensible de mesure (7, 15) constituant, en outre, l'élément d'actionnement dudit circuit de commande (25).

11. Dispositif automatique selon l'une des revendications 8 à 10, caractérisé en ce que les moyens de comparaison (24, 35) sont reliés au circuit (26) de commande de marche de l'essuie-glace par l'intermédiaire d'une porte « ET » (34) dont une entrée est connectée à des moyens de détection de l'état de surface du vitrage (1) ou de la température extérieure de manière à interdire le fonctionnement de l'essuie-glace (10) en présence d'une couche de givre ou de neige sur ledit vitrage.

12. Dispositif automatique selon l'une des revendications 8 à 11, caractérisé en ce qu'il comporte un organe (38) d'indication du degré de salissure de la zone (11) du vitrage située en dehors du champ d'action de l'essuie-glace (10), visible de l'utilisateur, ce dispositif étant commandé par lesdits moyens de comparaison (24, 35).

**Claims**

1. An automatic device for operating cleaning devices (10) for a window pane (1) of an motor vehicle, comprising two photosensitive elements (6, 7 ; 14, 15), the device also comprising an electronic circuit for receiving and comparing the responses of the two photosensitive elements and means for automatically actuating the cleaning members when the difference in response between the elements exceeds a given magnitude, characterised in that said elements are arranged so as to be affected by light passing through the pane, the first (7, 14) being adapted to receive this light directly and the second (6, 15) being shielded from the direct action of this light so that it is affected only by the light transmitted through the pane interior.

2. Automatic device according to claim 1, characterised in that the photosensitive element (7, 14) receiving the direct light is situated in the field of action of a cleaning member (10) and constitutes a measuring element, and the photosensitive element (6, 15) receiving only the light transmitted through the pane interior constitutes the reference element and is situated outside this field.

3. Automatic device according to claim 1 or 2, characterised in that the photosensitive elements are photodiodes (14, 15) of which the thickness is such that they are embedded in the intermediate plastics material layer (16) of a laminated pane (V) and the reference photodiode (15) is shielded from direct light either by mounting in the part of the pane enclosed in the joint (J) of the pane, or by an opaque cover (18) situated outside the vehicle on the pane facing the reference photodiode (15) forming a screen against direct light.

4. Automatic device according to claim 1 or 2, characterised in that it comprises a support (3) situated inside the vehicle holding the two photosensitive elements (6, 7) with their sensitive surfaces directed towards the pane, and a cover (4) positioned outside the vehicle on the pane facing the reference photosensitive element (6) and forming a screen against direct light.

5. Automatic device according to claim 4, characterised in that a perforation (2) is provided in the pane (1) to allow passage of holding members (3a and 4a) for support (3) and cover (4), said members comprising openings (12) allowing passage of light transmitted through the pane interior to the reference photosensitive element (6).

6. Automatic device according to claim 5, characterised in that the members for holding the support and cover, comprise a tubular projection (3a) and a skirt (4a) cooperating by enclosure one on the other, and diametrically opposed corresponding passages (12, 13) are provided in the tubular projection (3a) and the skirt (4a).

7. Automatic device according to claim 4, 5 or 6, characterised in that the support (3) comprises cavities (5) into which the photosensitive elements (6, 7) are introduced and at the bottom of which is provided a window (8) of which the cross-section corresponds to the amount of light by which the elements are desired to be influenced.

8. Automatic device according to any one of the preceding claims, characterised in that the electronic circuit comprises a current-voltage converter (22, 37), an analogue/digital converter (23, 36) and comparator means (24, 35) connected to circuit (26) for controlling operation of the wiper (10).

9. Automatic device according to claim 8, characterised in that the comparator means comprise either a separate comparator (35) or a comparator incorporated in a microprocessor (24).

10. Automatic device according to claim 8 or 9, characterised in that it is associated with a circuit (25) for controlling lights of the vehicle, the measuring photosensitive element (7, 15) further forming the element actuating said controlling circuit.

11. Automatic device according to claim 8, 9 or 10, characterised in that the comparator means (24, 35) are connected to the circuit (26) for controlling the wiper through an AND gate (34) of which an input is connected to means for detecting the surface state of the pane (1) or the exterior temperature so as to prevent operation of the wiper (10) in the presence of a layer of frost or snow on the pane.

12. Automatic device according to one of claims 8 to 11, characterised in that it comprises a member (38) for indicating the degree of dirtiness of the zone (11) of the pane situated outside the field of action of the wiper (10), visible to the user, this member being controlled by said comparator means (24, 35).

**Patentansprüche**

1. Automatische Betätigungsvorrichtung für Scheibenreinigungsorgane (10) eines Kraftfahrzeuges, mit zwei fotoempfindlichen Elementen (6, 7 ; 14, 15), einer elektronischen Schaltung zur Aufnahme und für den Vergleich der Antworten beider fotoempfindlicher Elemente und mit Einrichtungen zur automatischen Steuerung der Reinigungsorgane, wenn die Antwortdifferenz dieser Elemente einen bestimmten Schwellwert übersteigt, dadurch gekennzeichnet, daß die Elemente derart angeordnet sind, daß sie durch die Scheibe durchstrahlendes Licht beeinflußbar sind, wobei das erste Element (7, 14) so ausgebildet ist, daß es unmittelbar dieses Licht aufnimmt, und das zweite Element (6, 15) derart gegen jede direkte Einwirkung dieses Lichtes geschützt ist, daß es nur durch Licht durch das Innere der Scheibe beeinflußbar ist.

2. Vorrichtung nach Anspruch 1, dadurch gekennzeichnet, daß das fotoempfindliche Element (7, 14), welches Licht direkt aufnimmt, im Wirkungsbereich des Reinigungsorgans (10) angeordnet ist und das Meßelement bildet, und daß das fotoempfindliche Element (6, 15), welches nur durch das Scheibeninnere gelassenes Licht aufnimmt, das Bezugselement bildet und außerhalb dieses Wirkungsbereiches angeordnet ist.

3. Vorrichtung nach Anspruch 1 oder 2, dadurch gekennzeichnet, daß die fotoempfindlichen Elemente durch Fotodioden (14, 15) mit einer solchen Dicke gebildet sind, daß sie in die Zwischenschicht (16) aus Kunststoff eines Verbundglases (V) einbettbar sind, und daß die Bezugs-Fotodiode (15) gegenüber direktem Licht durch Anordnung in dem in der Dichtung (J) der Scheibe angeordneten Abschnitt oder durch eine lichtundurchlässige Kappe (18) geschützt ist, welche außerhalb des Fahrzeuges in Ausrichtung mit der Bezugsfotodiode (15) auf der Scheibe angeordnet ist und einen Schirm gegen direktes Licht bildet.

4. Vorrichtung nach Anspruch 1 oder 2, dadurch gekennzeichnet, daß die Vorrichtung ein im Inneren des Fahrzeuges angeordnetes Stützglied (3) aufweist, welches die beiden fotoempfindlichen Elemente mit ihrer empfindlichen Seite zur Verglasung gerichtet hält, und daß die Vorrichtung einen außerhalb des Fahrzeuges an der Scheibe gegenüber dem fotoempfindlichen Bezugselement (6) angeordneten Knopf (4) aufweist, welcher einen Schirm gegen das direkte Licht bildet.

5. Vorrichtung nach Anspruch 4, dadurch gekennzeichnet, daß in der Scheibe (1) eine Öffnung (2) für den Durchgriff der Halteglieder (3a) und (4a) für das Stützglied (3) und den Knopf (4) ausgebildet ist, wobei die Halteglieder Öffnungen (12) für den Durchtritt von durch das Innere des Glases gegen das fotoempfindliche Bezugselement (6) gelassenes Licht aufweisen.

6. Vorrichtung nach Anspruch 5, dadurch gekennzeichnet, daß die Halteglieder für das Stützglied und den Knopf durch einen rohrförmigen Vorsprung (3a) und eine Schürze (4a) gebildet sind, welche ineinandersteckbar sind, und daß die diametral gegenüberliegenden und korrespondierenden Durchgänge (12, 13) auf dem rohrförmigen Vorsprung (3a) und der Schürze (4a) vorgesehen sind.

7. Vorrichtung nach einem der Ansprüche 4 bis 6, dadurch gekennzeichnet, daß das Stützglied (3) Aussparungen (5) aufweist, in welchen die fotoempfindlichen Elemente (6, 7) aufgenommen sind und an deren Boden ein Fenster (8) ausgebildet ist, dessen Querschnitt der Menge an Licht entspricht, von dem die Elemente beeinflußbar sein sollen.

8. Vorrichtung nach einem der vorhergehenden Ansprüche, dadurch gekennzeichnet, daß die elektronische Schaltung einen Strom/Spannung-Wandler (22, 37), einen Analog-Digital-Umsetzer (23, 26) und Vergleichseinrichtungen (24, 35) aufweist, welche mit der Schaltung (26) zur Steuerung des Scheibenwischerbetriebes verbunden sind.

9. Vorrichtung nach Anspruch 8, dadurch gekennzeichnet, daß die Vergleichseinrichtungen entweder durch einen getrennten Vergleicher (35) oder einen in einem Mikroprozessor (24) eingebauten Vergleicher gebildet sind.

10. Vorrichtung nach Anspruch 8 oder 9, dadurch gekennzeichnet, daß die Vorrichtung einer Schaltung (25) zur Steuerung der Fahrzeugbeleuchtung zugeordnet ist, wobei das fotoempfindliche Meßelement (7, 15) das Betätigungselement der Steuerschaltung (25) bildet.

11. Vorrichtung nach einem der Ansprüche 8 bis 10, dadurch gekennzeichnet, daß die Vergleichseinrichtungen (24, 35) mit der Steuerschaltung (26) für die Wischerbetätigung über ein « UND »-Glied (34) verbunden sind, wobei ein Eingang mit einer Detektoreinrichtung zur Ermittlung des Oberflächenzustandes der Scheibe (1) oder der Außentemperatur verbunden ist, um in Gegenwart einer Eis- oder Schneeschicht auf der Scheibe die Wischerbetätigung (10) zu verhindern.

12. Vorrichtung nach einem der Ansprüche 8 bis 11, dadurch gekennzeichnet, daß die Vorrichtung ein Anzeigeglied (38) für den Verschmutzungsgrad der außerhalb des Wirkungsfeldes des Scheibenwischers (10) befindlichen Sichtzone (11) der Scheibe aufweist, wobei die Vorrichtung durch die Vergleichseinrichtungen (24, 35) gesteuert ist.

0 177 419

FIG.1

FIG.3

0 177 419

FIG_2

FIG_5

FIG_4

2

FIG.6